# EUROPÄISCHE PATENTANMELDUNG

(11) **EP 1 422 200 A2**
(43) Veröffentlichungstag der Anmeldung: **26.05.2004**
(21) Anmeldenummer: 03026907.0
(22) Anmeldetag: 24.11.2003
(51) Int. Cl.: C03B 7/00

(54) **Vorrichtung und Verfahren zur Verarbeitung von Glasposten unterschiedlicher Massen und zugehörende Speisevorrichtung**

(30) Priorität: 22.11.2002 DE 10254654
(71) Anmelder: Heinz Glas GmbH, 96355 Kleintettau (DE)
(72) Erfinder: Müller, Franz, 96317 Kronach (DE); Jungkunz, Wilfried, 96358 Teuschnitz (DE); Krischke, Alfred, 96355 Tettau (DE)
(74) Vertreter: Zipse + Habersack

(57) **Zusammenfassung**

Die Erfindung betrifft eine Vorrichtung zur Herstellung von Glasprodukten mit unterschiedlicher Masse, umfassend wenigstens eine Speisevorrichtung (12), Zufuhrvorrichtungen (28,31) und wenigstens zwei Formgebungsstationen (32), wobei die Speisevorrichtung wenigstens einen in einer Speisewanne vertikal beweglichen Plunger (18a, 18b) zur Steuerung der Ausgabeöffnung der Speisewanne (14) und eine Schneidvorrichtung (24a,24b) in der Ausgabeöffnung aufweist, welche Komponenten durch wenigstens eine Steuerung (22) steuerbar sind. Zur individuellen effektiven Steuerung der Glaspostenmasse ist der den Minimalabstand zwischen Plunger und Ausgabeöffnung bezeichnende untere Totpunkt (s₁ bis s₄) des Plungers (18a,b) mit jedem Arbeitstakt (Δt₁ bis Δt₄) variabel steuerbar.

## Beschreibung

Die vorliegende Erfindung betrifft eine Vorrichtung und ein Verfahren zur Herstellung von Glasprodukten, insbesondere kleinen Glasprodukten mit einer Masse von weniger als 1 kg, vorzugsweise weniger als 500g in sogenannten IS-Maschinen (individual-section-Maschinen). Eine derartige Vorrichtung umfaßt wenigstens eine Speisevorrichtung, Zufuhrvorrichtung und wenigstens zwei Formgebungsstationen, die durch die Speise- und Zufuhrvorrichtung bedient werden. In den Formgebungsstationen werden Produkte mit unterschiedlicher Masse hergestellt, was es erfordert, dass durch die Speisevorrichtung und die Zufuhrvorrichtung Glasposten unterschiedlicher Masse zugeführt werden.

Ein Verfahren dieser Art ist aus der EP 668 248 bekannt. Die Herstellung unterschiedlicher Glasposten wird dort realisiert, indem der Verfahrweg des Plungers für jeden Glasposten entsprechend der erforderlichen Masse unterschiedlich gewählt wird. Die Masse des Glaspostens kann jedoch mit diesem Verfahren nur innerhalb engerer Grenzen verändert werden.

Der Erfindung liegt somit die Aufgabe zugrunde, eine Vorrichtung und ein Verfahren aufzuzeigen, die eine effiziente Herstellung von Glasprodukten in einer Herstellungsvorrichtung mit stärker abweichenden Massen ermöglichen. Diese Aufgabe wird durch eine Glasherstellungsvorrichtung gemäß Anspruch 6, durch eine Speisevorrichtung gemäß Anspruch 4 und durch ein Verfahren gemäß Anspruch 1 gelöst. Vorteilhafte Weiterbildungen der Erfindung sind Gegenstand der zugehörigen Unteransprüche.

Die Anmelderin hat herausgefunden, dass den wesentlichen Anteil an der Herstellung unterschiedlicher großer Glasposten nicht die Einstellung des Verfahrweges des Plungers bewirkt, wie sie in der oben genannten EP Anmeldung Nr. 668 248 praktiziert wird, sondern die Verstellung des unteren Totpunktes des Plungers, der für jeden Glasposten individuell einzustellen ist. Durch die Änderung des unteren Totpunktes im vertikalen Verfahrweg des Plungers wird somit die Postenbildung sehr viel stärker beeinflußt als durch die bekannte Änderung des Verfahrweges ausgehend von einem fest definierten Totpunkt. Auf diese Weise ist die Herstellung von Glasprodukten mit stärker unterschiedlichen Massen möglich. Vorzugsweise wird nicht nur der untere Totpunkt sondern auch die zeitliche Länge des Arbeitstaktes für jeden Glasposten individuell gewählt. Auch dies steht im Widerspruch zu der oben genannten EP Anmeldung Nr. 668 248, die für alle Glasposten den gleichen Arbeitstakt verwendet. Durch die Variation des unteren Totpunktes kombiniert mit einer Variation der Länge des Arbeitstaktes können somit hervorragend dosierte Glasposten unterschiedlicher Masse erzeugt und den unterschiedlichen Formgebungsstationen zugeführt werden.

Vorzugsweise enthält die Speisevorrichtung wenigstens zwei Plunger und die entsprechenden Formgebungsstationen haben eine entsprechende Anzahl an Formgebungseinheiten, wodurch mit einem Arbeitstakt gleichzeitig mehrere Formen herstellbar sind. Obwohl in den Formgebungseinheiten die gleichen Produkte hergestellt werden, somit von allen Plungem die gleiche Größe eines Glasposten abgegeben wird, wurde überraschender Weise festgestellt, dass auch in diesem Fall der untere Totpunkt der Plunger unterschiedlich gewählt werden soll, um eine absolut identische Masse der gleichzeitig hergestellten Glasposten zu erhalten. Selbstverständlich ist der Arbeitstakt der Plunger identisch. Vorzugsweise ist daher auch bei einer Vorrichtung mit Doppel- oder Dreifach-Plungern jeder Plunger in seinem unteren Totpunkt individuell einstellbar, d. h. die minimale Höhe des Plungers relativ zum Bodenauslaß bzw. der untere Umkehrpunkt des Plungers zwischen zwei Arbeitstakten ist individuell einstellbar.

Um unterschiedlich große Glasposten herzustellen, wird somit vorzugsweise die Veränderung des unteren Totpunktes mit jedem Arbeitszyklus als auch die individuelle Einstellung der Länge des Arbeitstaktes für jeden Glasposten verwendet, um eine optimale Steuerung der Glaspostenmasse zu erzielen. Auf diese Weise können in den unterschiedlichen Formgebungs- bzw. Fertigungsstationen Glasposten mit stark unterschiedlicher Glaspostenmasse verarbeitet werden.

Die Steuerung der einzelnen Komponenten kann dezentral oder zentral vorgesehen sein. Die maximale Anzahl der Formgebungsstationen richtet sich nach den äußeren Bedingungen, kann somit zwei, drei, vorzugsweise jedoch auch fünf bis zehn oder bis zu zwanzig und mehr betragen. Statt kleinen Hohlglasprodukten können unter anderem auch andere Glasprodukte wie z. B. Pressglasprodukte hergestellt werden.

Die Erfindung wird nachfolgend beispielsweise anhand der schematischen Zeichnungen beschrieben. In dieser zeigen:
Figur 1 eine Herstellungsvorrichtung zur gleichzeitigen Verarbeitung von zwei Posten je Formgebungsstation,
Figur 2 ein Weg-Zeit-Diagramm einer Plungerbetätigung bei einer Herstellungvorrichtung mit vier Formgebungsstationen, und
Figur 3 ein Weg-Zeit-Diagramm gemäß Figur 2, jedoch mit Doppelplunger zur Beschickung von vier Formgebungsstationen mit je zwei Formgebungseinheiten und
Fig. 4 ein Weg-Zeit-Diagramm einer Plungerbetätigung bei einer Herstellungvorrichtung mit drei Formgebungsstationen mit Variation des unteren Totpunkts und unverändertem Arbeitstakt.

Die Herstellungsmaschine 10 umfaßt eine Speisevorrichtung 12, bestehend aus einem Glasreservoir 14, indem sich eine auf etwa 1100 bis 1250°C aufgeheizte Glasschmelze 16 befindet. In dem Glasreservoir 14 sind zwei Plunger 18a, 18b angeordnet, die am Betätigungsmechanismus (nicht dargestellt) über eine Steuerleitung 20 mit einer zentralen Steuerung 22 verbunden sind. Die Plunger 18a, 18b sind vertikal verfahrbar und dienen zur Steuerung des Glasaustrags pro Glasposten. Die Glasposten werden entsprechend der Betätigung der Plunger 18a, 18b über Öffnungen im Boden des Glasreservoirs 14 abgegeben. Der untere Totpunkt der Plunger, der Öffnungsweg (auch Plungerhub bzw. Verlauf des Hubs) als auch die Öffnungszeit (oder Arbeitstakt) des Plungers werden über die Steuerleitung 20 durch die Steuerung 22 gesteuert. Hierbei fließt eine vordefinierte Glasmenge, nachfolgend "Glasposten" genannt, durch die Bodenöffnung nach unten. Nach Zurückfahren der Plunger in ihren unteren Totpunkt oder bei der erneuten Aufwärtsbewegung des Plungers für den nächsten Arbeitstakt wird der Glasposten durch unterhalb der Öffnungen angeordnete Schneideinrichtungen 24a, 24b abgeschnitten und fällt in eine Zufuhreinrichtung 28, die über eine Steuerleitung 30 mit der zentralen Steuerung 22 verbunden ist. Die Zufuhreinrichtung 28 verfügt über eine bewegdurch die die gleichzeitige Zufuhr der zwei Posten zu den einzelnen Formgebungseinheiten der Formgebungsstationen 32a bis c möglich ist. Die ersten drei Formgebungsstationen 32a sind zur Verarbeitung einer ersten Postengröße ausgebildet, während die letzten beiden Formgebungsstationen 32b und 32c zur Verarbeitung von Hohlglasprodukten konzipiert sind, die zueinander und zu den Formgebungsstationen 32a unterschiedliche Postengrößen erfordern. Selbstverständlich können alle Formgebungsstationen zur Herstellung von Produkten mit unterschiedlicher Glasmasse, also zur Handhabung unterschiedlich großer Posten ausgebildet sein.

Unterhalb der Formgebungseinheiten 32 ist ein Transportband 34 angeordnet. Das Förderband 34 als auch die Formgebungsstationen 32 sind über eine Steuerleitung 40 mit der zentralen Steuerung 22 verbunden, die jedoch auch dezentral und separat für die einzelnen Komponenten vorgesehen sein kann.

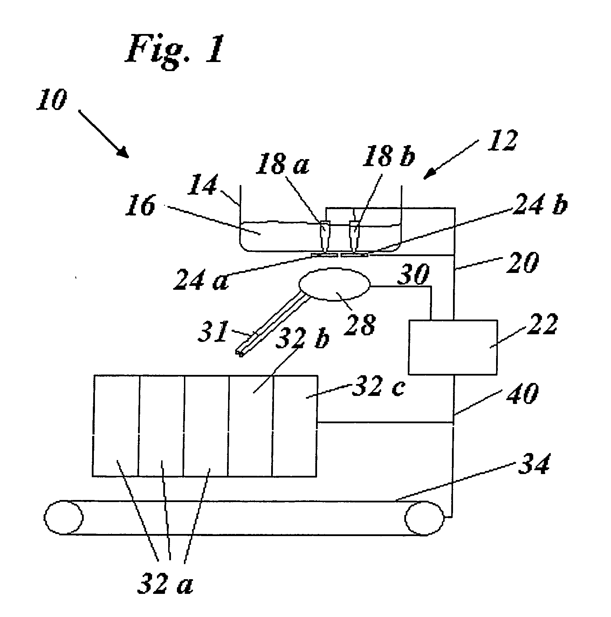

Die Funktionsweise der in Figur 1 dargestellten Vorrichtung wird im Folgenden beschrieben.

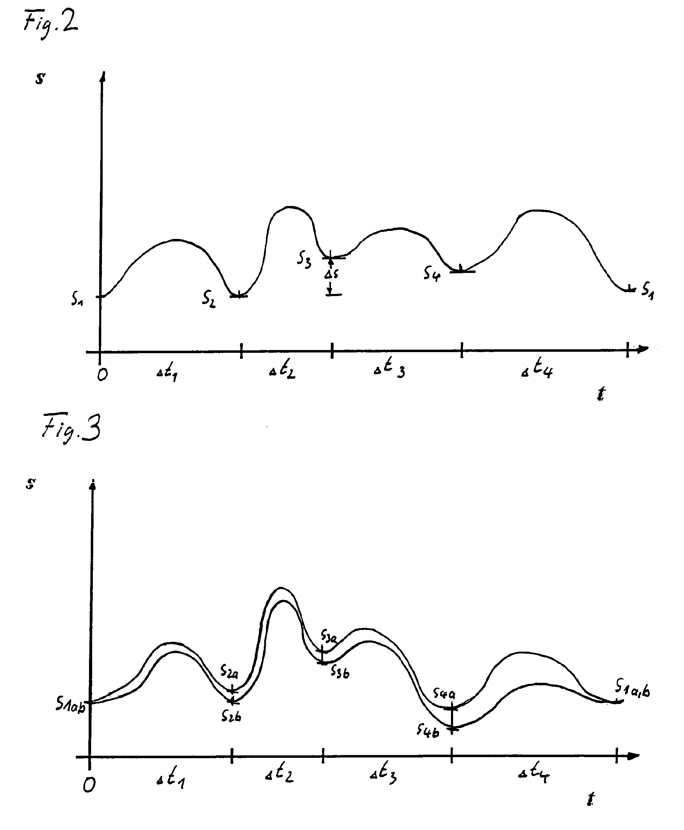

Die in den Formgebungsstationen 32a bis 32c herzustellenden Hohlglasprodukte erfordern aufgrund der unterschiedlichen Postengröße eine individuelle Einstellung des unteren Totpunktes als auch gegebenenfalls des Verfahrweges und gegebenenfalls des Arbeitszyklus der Plunger 18a, 18b die in Zusammenwirken mit einer korrespondierenden Betätigung der Schneideinrichtungen 24a, 24b (ebenfalls entsprechend unterschiedliche Arbeitszyklen) zu unterschiedlich großen Posten führt. Diese werden wiederum über die Zufuhreinrichtung 28 an die Formgebungsstationen 32a bis 32c abgegeben. Jede Formgebungsstation enthält hierbei zwei identische Formgebungseinheiten, die über die beiden separat und unterschiedlich betätigbaren Plunger 18a und 18b bedient werden. Die unterschiedliche Postengröße wird hierbei hauptsächlich über die Veränderung des unteren Totpunktes des Plungers, d. h. der minimalen Höhe der Plungerunterseite über der darunterliegenden Öffnung des Glasreservoirs am unteren Umkehrpunkt des Plungers realisiert. Des weiteren wird vorzugsweise auch die Länge des Arbeitstaktes variiert, wie es aus den nachfolgenden Figuren 2 und 3 ersichtlich ist. Vorzugsweise wird auch der Hub bzw. die Verfahrkurve des Plungers geändert. Die Produkte werden in den Formgebungsstationen 32a bis 32c geformt und auf ein Transportband 34 abgegeben, durch die sie zu einer weiteren Verarbeitungs- oder Verpackungsvorrichtung (nicht dargestellt) transportiert werden.

Die Tätigkeit der Speisevorrichtung ist anhand Figur 2 erläutert. Diese zeigt den Betätigungsweg s eines Plungers in Abhängigkeit von der Zeit t. Die Betätigung des Plungers zum Zeitpunkt 0 beginnt mit den unteren Totpunkt s1, d. h. einer gewissen Höhe des Plungers über der Abgabeöffnung des Glasreservoirs. Anschließend wird der Plunger in einem ersten Arbeitstakt der Länge Δ t1 entsprechend dem dargestellten Graphen nach oben und wieder nach unten auf einen zweiten Totpunkt s2 bewegt, der sich geringfügig von dem unteren Totpunkt s1 unterscheidet. Hierbei wird ein Glasposten mittlerer Größe hergestellt. Anschließend wird der Plunger von dem unteren Totpunkt s2 wiederum hochgefahren und nach dem Ende des relativ kurzen Arbeitszyklus Δ t2 in die Höhe eines dritten Totpunktes s₃ verfahren, der gegenüber dem vorherigen Totpunkt deutlich nach oben verschoben ist. Selbstverständlich wird mit oder kurz nach dem Erreichen des unteren Totpunktes der Glasposten durch die zugehörigen Schneidmaschinen 24a, 24b abgeschnitten, wodurch die unterschiedlich schweren Glasposten separiert werden. Der untere Totpunkt s3 ist um den Betrag Δs höher gelegen als der vorherige untere Totpunkt s2. Wiederum wird ein Glasposten mittlerer Stärke im Arbeitszyklus Δt3 erzeugt, nach dessen Ende der Plunger auf den unteren Totpunkt s4 fährt. In dem letzten Arbeitszyklus Δt4 wird noch mal ein relativ großer Glasposten erzeugt, worauf der Plunger wieder auf sein anfänglichen Totpunkt s1 zurückfährt und der gesamte Zyklus mit den vier Arbeitszyklen Δt1 bis Δt4 wiederholt wird.

Sowohl durch die Veränderung des unteren Totpunktes als auch durch die Verfahrkurve und die Variation des Arbeitszyklus, d.h. der Öffnungszeit der Plungers Δt1 bis Δt4 läßt sich die Größe des Glaspostens ideal anpassen.

Figur 3 zeigt ein entsprechendes Betätigungsdiagramm im Falle eines Doppelplungers wie er z. B. in Figur 1 dargestellt ist. Auffällig hierbei ist, dass um ein identisches Postengewicht in den beiden Öffnungen unter den Plungern 18a, 18b zu erhalten, der untere Totpunkt s1a, b bis s4a, s4b unterschiedlich gewählt werden muß. Dies ist offensichtlich bedingt durch unterschiedliche Verhältnisse bezüglich Strömung und Temperatur an dem entsprechenden Auslaß unterhalb des zugehörigen Plungers 18a, 18b. Somit sind auch die beiden Plunger 18a, 18b unabhängig in einem Arbeitstakt Δt1 bis Δt4 voneinander betätigbar, um möglichst identisch große Glasposten zur Zufuhr in den beiden Formgebungseinheiten der Formgebungsstationen 32a bis 32c zu erzielen.

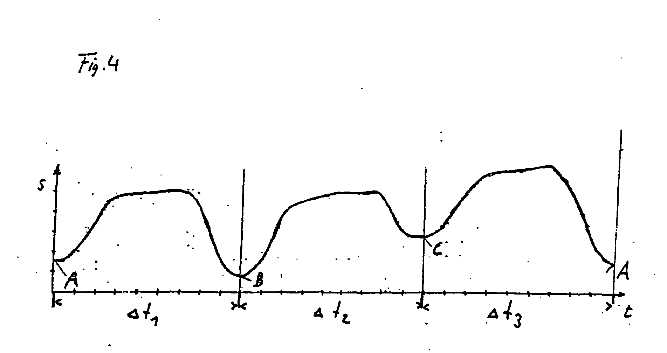

Fig. 4 zeigt ein Weg-Zeit-Diagramm der Plungerbetätigung einer Speisevorrichtung zur Versorgung von drei Formgebungsstationen mit unterschiedlicher Masse (Glaspostenmasse). Allein die Veränderung des unteren Totpunktes (A,B,C) bewirkt bereits eine starke Veränderung der ausgetragenen Glaspostenmasse, obwohl die Arbeitszyklen Δt1 bis Δt3 konstant sind und der Verfahrweg sich nicht bemerkenswert in den drei unterschiedlichen Arbeitstakten unterscheidet.

Die Steuerung der Plunger und Schneideinrichtungen kann dabei nach herkömmlicher Technik über Kurvenscheiben und andere mechanische Steuerungen als auch programmgesteuert über elektrisch bzw. magnetisch betätigbare Elemente erfolgen.

Anstelle eines Doppelplungers können auch Dreifach- oder Vierfachplunger verwendet werden, die dann jeweils unterschiedlich ansteuerbar sind.

## Patentansprüche

1. Vorrichtung zur Herstellung von Glasprodukten mit unterschiedlicher Masse, umfassend wenigstens eine Speisevorrichtung (12), Zufuhrvorrichtungen (28,31) und wenigstens zwei Formgebungsstationen (32), wobei die Speisevorrichtung wenigstens einen in einer Speisewanne vertikal beweglichen Plunger (18a, 18b) zur Steuerung der Ausgabeöffnung der Speisewanne (14) und eine Schneidvorrichtung (24a,24b) in der Ausgabeöffnung aufweist, welche Komponenten durch wenigstens eine Steuerung (22) steuerbar sind, und wobei der den Minimalabstand zwischen Plunger und Ausgabeöffnung bezeichnende untere Totpunkt (S₁ bis S₄) des Plungers (18a,b) mit jedem Arbeitstakt (Δt₁ bis Δt₄) variabel steuerbar ist,
**dadurch gekennzeichnet, dass** die Länge des Arbeitstaktes (Δt₁ bis Δt₄) des Plungers (18a,b) von Arbeitstakt zu Arbeitstakt variabel steuerbar ist.

2. Speisevorrichtung für Glasherstellungsmaschinen, umfassend wenigstens einen in einer Speisewanne vertikal beweglichen Plunger (18a,b) und eine Schneidvorrichtung (24 a,b) im Ausgang, welche Komponenten durch wenigstens eine Steuerung (22) steuerbar sind, und wobei der untere Totpunkt (s₁ bis s₄) des Plungers (18a,b) mit jedem Arbeitstakt (Δt₁ bis Δt₄) variabel steuerbar ist.
**dadurch gekennzeichnet, dass** die Länge des Arbeitstaktes (Δt₁ bis Δt₄) des Plungers (18a,b) von Arbeitstakt zu Arbeitstakt variabel steuerbar ist.

3. Vorrichtung nach einem der vorhergehenden Ansprüche,
**dadurch gekennzeichnet, dass** wenigstens zwei Plunger (18a,b) in der Speisewanne vorgesehen sind, und dass der untere Totpunkt (s_{2a,b}) der beiden Plunger bei einem Arbeitstakt unterschiedlich steuerbar ist.

4. Vorrichtung nach einem der vorhergehenden Ansprüche,
**dadurch gekennzeichnet, dass** der Hub bzw. die Verfahrkurve des Plungers (18a,b) mit jedem Arbeitstakt variabel steuerbar ist.

5. Verfahren zur Verarbeitung von Glasposten in IS-Maschinen, die wenigstens eine Speisevorrichtung, Zufuhrvorrichtungen und wenigstens zwei Formgebungsstationen umfassen, wobei die Speisevorrichtung wenigstens einen in einer Speisewanne vertikal beweglichen Plunger und eine Schneidvorrichtung im Ausgang aufweist, welche Komponenten durch wenigstens eine Steuerung gesteuert werden,
**dadurch gekennzeichnet, dass** der untere Totpunkt des Plungers innerhalb einer der Anzahl der Formgebungsstationen entsprechenden Anzahl von Hüben wenigstens einmal verändert wird, um Glasprodukte unterschiedlicher Massen herzustellen.

6. Verfahren nach Anspruch 5,
**dadurch gekennzeichnet, dass** der untere Totpunkt des Plungers mit jedem Hub verändert wird.

7. Verfahren nach Anspruch 5 oder 6,
**dadurch gekennzeichnet, dass** sowohl der untere Totpunkt als auch die Länge des Arbeitstaktes des Plungers verändert wird.

8. Verfahren nach einem der Ansprüche 5 bis 7,
**dadurch gekennzeichnet, dass** die Speisevorrichtung wenigstens zwei Plunger zur Speisung einer entsprechenden Anzahl von Formgebungseinheiten einer Formgebungsstation enthält, wobei die Länge des Arbeitstaktes der beiden Plunger identisch, der untere Totpunkt jedoch unterschiedlich eingestellt werden.

9. Verfahren nach einem der Ansprüche 5 bis 8,
**dadurch gekennzeichnet, dass** der Hub bzw. der Verfahrweg der Plunger unterschiedlich eingestellt wird.
